# EUROPEAN PATENT SPECIFICATION

(11) **EP 2 261 881 B1**
(45) Date of publication and mention of the grant of the patent: **31.08.2016**
(21) Application number: 09388016.9
(22) Date of filing: 19.10.2009
(51) Int. Cl.: G09F 19/18, G09F 27/00, H04L 29/08, G09F 19/22, G09F 21/04

(54) **Projecting media on surroundings of moving vehicle**
Projektion von Medien in die Umgebung eines sich bewegenden Fahrzeugs
Projection de média sur les environs d'un vehicule mouvant

(30) Priority: 08.06.2009 US 455795
(43) Date of publication of application: 15.12.2010
(73) Proprietor: Taherloo, Babak, 2750 Ballerup (DK)
(72) Inventor: Taherloo, Babak, 2750 Ballerup (DK)
(74) Representative: Kilchert, Jochen

(56) References cited:
- EP-A2- 1 085 492
- WO-A1-94/07233
- WO-A2-93/16459
- US-A- 5 628 056

## Description

### Field of the invention

0001 The present invention relates generally to giving passengers in a vessel like trains or underground trains, a possibility to view and hear, media content, displayed on the wall or other items surrounding the vessel, and receiving the audio as a wireless signal, with personal devices, such as Fm receivers.

The term vessel will throughout this document and henceforth, be used as a general term for any tool, machine, vehicle, train, vessel, ship, aircraft, and any utility used for transport, whether it be on ground, on water or in air, whether it be with passengers or without.

### Background of the invention

0002 The invention will be described with the reference to a moving vessel, with a projector mounted on the sides, displaying visual media content on its surroundings, while the sound associated with the media being displayed, will be broadcasted wirelessly to users of the vessel, who can receive the sound be using wireless receivers.

0003 It is desirable for passenger to sit in a train, a transport vessel, an underground train, and view media content, on the wall or surroundings of the vessel.

A system displaying visual media in public places is known from EP 1085492 A2. A system projecting media content from a projector a board a moving vessel on the wall of a tunnel is known from WO 94/07233 A1.

0005 Although projectors are in use today, they have not been in use for displaying media content on the wall or surroundings of a moving vessel, like a train passing through a tunnel. The walls which so far could not be used for media content, such as promotional, informational or marketing purposes. This is because of the difficulties to put up or maintain almost any form of advertisement or media inside these tunnels, without delaying the traffic, or other difficulties connected with this form of advertisement. With Echolight it will now be possible and much more handy.

0006 The idea and effort of this invention is to broadcast media, advertise, or give information to users or passengers of a vessel, and at the same time to minimize the delay and maintenance cost involved with these kind of project.

### Summary of invention

0007 The invention is defined by the system of appended independent claim. The present invention provides a projector which is mounted on a vessel, displaying media content on the surroundings of the vessel, and transmitting a wireless audio signal to the passengers or users of the vessel. The wireless audio signal may be transmitted by short distance FM or other available wireless transmitters. This wireless signal can then be received by the users of the vessel, using their wireless receivers, as an example they can use the FM-Radio on their cell phone.

### Detailed description

The Echo Light system is composed of following components:

### Projector

The projector is adapted to be mounted on the sides of a vessel moving through a tunnel or areas where the light and visual media content of the projector is viewable.

The projector is adapted to receive data transmitted by a local server aboard the vessel, and display visual media on the surroundings of the vessel. An antenna on the projector will receive and enhance the media signal sent by the server aboard the vessel, to the projector.

The data transmitted to the projector by the local server aboard the vessel can be any available media such as for example, moving pictures, film, text, images, animation etc.

Text can appear with the visual media, and will be of use for those passengers that can't receive the audio associated with the visual media displayed.

The projectors will stop and start projecting according to a schedule transmitted by the local server aboard the vessel. This schedule can be transmitted to the local server aboard the vessel by a central server.

The local server aboard the vessel can also be preprogrammed by authorized personnel.

### Audio transmitter

The projector and the local server are adapted communicate with an audio transmitter that is adapted to transmit a wireless audio signal containing the audio associated with the visual media projected by the projector.

If the passengers aboard the wish to listen to the audio associated with visual media displayed by the projector, they can receive the audio as a wireless signal transmitted by the audio transmitter, using their personal wireless receivers, such as for example, devices with FM radio receivers, Blue tooth devices, cell phones etc.

### Server aboard the vessel - Local server

The local server aboard the vessel is adapted to transmit data to the projector and audio transmitter, for visual media and associated audio.

The local server will continuously and constantly be communicating and synchronizing with a central server, and as a result these servers can always be updated so that the data for the media can be updated.

A specialist technician can also perform the task of updating the local server.

### Central server

A central server is adapted to communicate with the local server aboard the vessel, sending and receiving data that the local server will transmit to projectors and audio transmitters.

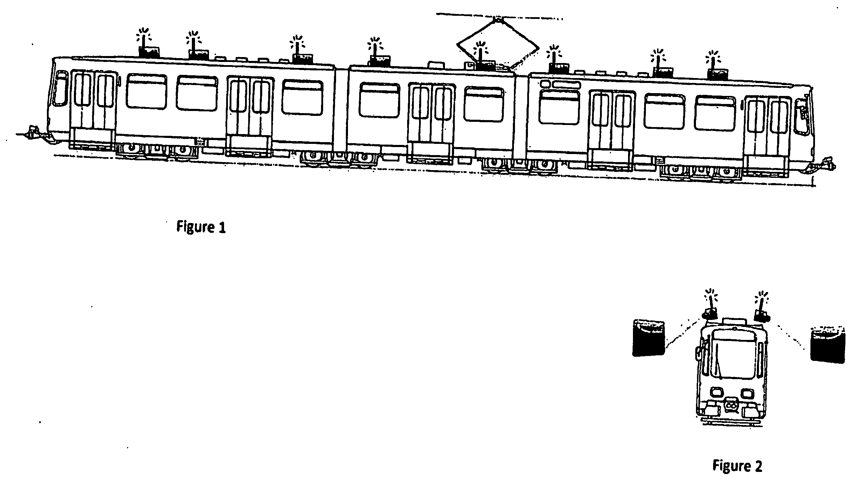

### Description of Figures 1 and 2:

Figure 1:
   An example of the projectors mounted on the train. The train being displayed from the side, and the projectors mounted above the windows of the train, thereby displaying the visual content so it can be seen by the passengers of the train.
Figure 2:
   Here the train being displayed from its front and the figure shows an example of the projectors displaying the visual content, on the sides of the train.

## Claims

1. A system for a moving vessel comprising:
a) a projector mounted on the moving vessel displaying a visual media content on a wall of a tunnel surroundings the moving vessel;
b) a receiver for wirelessly receiving the visual and an audio media content from a server aboard the moving vessel;
c) a transmitter for wirelessly transmitting to a user's cell phone or a user's Bluetooth device the audio associated with the visual media content displayed on the wall of the tunnel by the projector; and
d) a server aboard the moving vessel comprising a receiver to receive visual and audio media content from the central server, a transmitter to transmit the visual and audio media content to the projector, a processor to process the visual and audio content a central server comprising a receiver and a transmitter to communicate with the server aboard the vessel for update, schedule and maintenance purposes; and sending the visual and audio media content to the server aboard vessel.

## Patentansprüche

1. System für ein sich bewegendes Fahrzeug, umfassend:
a) einen Projektor, der an dem sich bewegenden Fahrzeug befestigt ist und auf einer Wand eines Tunnels, der das sich bewegende Fahrzeug umgibt, einen visuellen Medieninhalt anzeigt;
b) einen Empfänger zum drahtlosen Empfangen des visuellen und eines Audio-Medieninhalts von einem Server an Bord des sich bewegenden Fahrzeuges;
c) einen Sender zum drahtlosen Senden des Audioinhalts, der dem visuellen Medieninhalt zugeordnet ist, der durch den Projektor auf der Wand des Tunnels angezeigt wird, an ein Mobiltelefon eines Benutzers oder eine Bluetooth-Vorrichtung eines Benutzers; und
d) einen Server an Bord des sich bewegenden Fahrzeuges, umfassend: einen Empfänger, um visuellen und Audio-Medieninhalt von einem zentralen Server zu empfangen, einen Sender, um den visuellen und Audio-Medieninhalt an den Projektor zu senden, einen Prozessor, um den visuellen und Audioinhalt zu verarbeiten, einen zentralen Server, der einen Empfänger und einen Sender umfasst, um zu Aktualisierungs-, Planungs- und Wartungszwecken mit dem Server an Bord des Fahrzeuges zu kommunizieren und den visuellen und Audio-Medieninhalt an den Server an Bord des Fahrzeuges zu senden.

## Revendications

1. Système pour un véhicule mouvant comprenant :
a) un projecteur monté sur le véhicule mouvant affichant un contenu média visuel sur une paroi d'un tunnel entourant le véhicule mouvant ;
b) un récepteur pour recevoir sans fil le contenu média visuel et un contenu média audio provenant d'un serveur à bord du véhicule mouvant ;
c) un émetteur pour transmettre sans fil à un téléphone cellulaire d'utilisateur ou un dispositif Bluetooth d'utilisateur l'audio associé au contenu média visuel affiché sur la paroi du tunnel par le projecteur ; et
d) un serveur à bord du véhicule mouvant comprenant un récepteur pour recevoir un contenu média visuel et audio provenant du serveur central, un émetteur pour transmettre le contenu média visuel et audio au projecteur, un processeur pour traiter le contenu visuel et audio, un serveur central comprenant un récepteur et un émetteur pour communiquer avec le serveur à bord du véhicule à des fins de mise à jour, programmation et maintenance ; et envoyer le contenu média visuel et audio au serveur à bord du véhicule.
